# EUROPEAN PATENT SPECIFICATION

(11) **EP 3 020 664 B1**
(45) Date of publication and mention of the grant of the patent: **19.09.2018**
(21) Application number: 13897327.6
(22) Date of filing: 21.11.2013
(51) Int. Cl.: B65G 67/04, B65G 67/22, B65G 47/72

(54) **MOVABLE LOADING MACHINE WITH TWIN TELESCOPIC BOOM STRUCTURE**
BEWEGLICHE LADEMASCHINE MIT EINER STRUKTUR MIT ZWEI TELESKOPAUSLEGERN
MACHINE DE CHARGEMENT MOBILE À DOUBLE STRUCTURE DE FLÈCHE TÉLESCOPIQUE

(30) Priority: 13.11.2013 CN 201310573539
(43) Date of publication of application: 18.05.2016
(73) Proprietor: CRRC Qingdao Sifang Rolling Stock Research Institute Co., Ltd., Qingdao, Shandong 266031 (CN)
(72) Inventor: XING, Xiaodong, Qingdao Shandong 266031 (CN); DING, Hui, Qingdao Shandong 266031 (CN); SHAO, Lipeng, Qingdao Shandong 266031 (CN); ZHANG, Xingtian, Qingdao Shandong 266031 (CN); LIANG, Yajun, Qingdao Shandong 266031 (CN)
(74) Representative: J A Kemp
(86) International application number: PCT/CN2013/087587
(87) International publication number: WO 2015/070475

(56) References cited:
- CN-A- 1 663 893
- CN-A- 101 941 599
- CN-A- 103 303 692
- CN-U- 202 481 777
- CN-U- 202 481 777
- CN-Y- 2 297 428
- DE-C- 894 375
- DE-C- 949 818
- FR-A- 641 058
- GB-A- 1 338 183
- US-A- 4 284 380
- US-A- 4 904 154
- US-A- 5 772 390

## Description

### TECHNICAL FIELD OF THE INVENTION

The present invention relates to the field of railway freight technologies, and in particular to a movable loading device which is used in a railway freight depot and can continuously meter and load bulk freight (for example, coals or ores or the like) into a box of an open wagon.

### BACKGROUND OF THE INVENTION

With the development of railway freight transportation in our country, the freight volume of coal concentrated freight stations, port ore terminals and coal terminals or the like is sharply increased, and higher challenges to requirements for wagon bulk loading devices are put forward. In order to give full play to consolidation and distribution capacity of railway, a quickly ration loading technique shall be used in the loading operation of bulk freight. In railway freight terminals in our country, three manners are used in the existing quickly ration loading operation of bulk freight, namely, a loader loading manner, a fixed quickly loading system loading manner, and a movable loading machine loading manner.

The loader loading manner is gradually eliminated and abandoned due to disadvantages such as low efficiency, poor precision and large dust emission, etc. The fixed quickly loading system (also known as a ration silo or a ration loading system) loading manner is mature in loading technique and high in measuring precision, and has been widely used in domestic ports, railway freight terminals, loading stations or the like. However, this loading manner has the major disadvantages as below: 1) a traction locomotive is needed to drive a train during loading, and thus the locomotive is used; 2) the length of station track is large and the investment is high, the length of line required shall be twice no less than that of the train; 3) a bin may be easily jammed, and thus needs to be cleared manually, having a potential safety hazard. The movable loading machine breaks the traditional loading concept, and uses a loading manner characterized by a fixed wagon and a moving loading machine, which shortens the length of railway station track by one half and thus greatly saves the investment; a bin is not easily jammed when this system is used, the operation process is safe and reliable; in addition, the device itself is provided with a dust-removal system, thereby meeting the environmental protection requirement.

At present, a domestic movable loading machine is mainly used in large coastal ports to implement the function of loading cargos such as coals or ores (powders) into railway trucks. The existing movable loading machine consists essentially of a head wagon, a tail wagon, a walking drive device, a telescopic boom and a material dropping funnel. The movable loading machine and a ground belt conveyor are used cooperatively to constitute a movable loading system, and the working principle is as below: a to-be-loaded train parks on a loading line, materials are conveyed, along the ramp of the tail wagon by the ground belt conveyor, to the telescopic boom, then are conveyed, by means of a belt conveyor mounted on the boom, to the front-end material dropping funnel, and are finally loaded into a train compartment; and the loading machine runs along a ground rail in parallel with the train direction, and loads each compartment successively.

All the existing movable loading machines adopt a structural design of a single telescopic boom. In order to implement a continuous loading, the material dropping funnel at the front end of the boom is necessarily designed to be a "forked" structure, the continuous loading is implemented by controlling a baffle plate in the funnel to switch a material flow direction in case of a wagon bridge connection. However, the material dropping funnel having the "forked" structure is huge in size and has a height generally ranged from 4.5m to 5.5m. However, on an electrified railway, the maximum distance between an overhead contact system and an upper edge of a box of an open railway wagon is 3.857m (the height of the overhead contact system is 6.4m, and the train type is C100), and the minimum distance is 2.607m (the height of the overhead contact system is 6.4m, and the train type is C80), both of which are much less than the height of the "forked" material dropping funnel itself. Furthermore, in consideration of a preset safety distance between the overhead contact system and an external device, the existing movable loading machine is unable to achieve the objective of continuously metering and loading bulk freight into the box of the open railway wagon under the condition of an electrified railway.

The Chinese patent document CN 101941599 A discloses a movable loading machine according to the preamble of claim 1. In particular, the document discloses a moving loading machine with a telescopic boom structure, comprising a head wagon and tail wagon, the tail wagon is connected to the head wagon via s traction pull rod, wherein a telescopic boom and a forked hopper are mounted on the head wagon, the telescopic boom comprises a loading boom with a telescopic function. The forked hopper comprised a forked hopper with two channels, namely a main wagon loading channel and a recovery channel, and the loading channel is connected to the loading boom.

The Germany patent document DE 949818 C discloses a loading machine, provided with two boom structures and a stage of a hopper having an second wagon loading channel to move separately from a first wagon loading to perform a continuous loading of the wagons.

CN 202 481 777 U discloses an extra-heavy type discharging carriage for a belt-type conveyor.

### SUMMARY OF THE INVENTION

Aiming at the foregoing shortages in an existing railway freight loading device, the present invention provides a movable loading machine which can continuously meter and load bulk freight into a box of an open railway wagon and is applicable to the electrified railways, and can ensure a safe operation under electrified overhead contact systems.

The invention is defined as stated in claim 1. The technical solution of the present invention is as below: a movable loading machine with a twin telescopic boom structure, including a head wagon and a tail wagon, the tail wagon is connected to the head wagon via a traction pull rod, a twin telescopic boom and a dual-stage triple-channel forked hopper are mounted on the head wagon, the twin telescopic boom comprises a main wagon loading boom and an auxiliary wagon loading boom, which are mounted in parallel, the main wagon loading boom and the auxiliary wagon loading boom both are booms with a telescopic function, the dual-stage triple-channel forked hopper includes an upper-stage forked hopper and a lower-stage forked hopper, the upper-stage forked hopper and the lower-stage forked hopper together have three channels, namely a main wagon loading channel, an auxiliary wagon loading channel and a recovery channel, and the main wagon loading channel is connected to the main wagon loading boom and the auxiliary wagon loading channel is connected to the auxiliary wagon loading boom. Preferably, the head wagon includes a head wagon steel structure, an upper part of the head wagon steel structure is provided with a driver control room and a low-voltage electrical room, a bottom part of the head wagon steel structure is provided with a walking drive device, and the main wagon loading boom and the auxiliary wagon loading boom each is mounted on the head wagon steel structure.

Preferably the tail wagon includes a tail wagon steel structure designed with a ramp structure, the ramp of the tail wagon steel structure is provided with a carrier roller for ground belt running, a lower part of the tail wagon steel structure is connected with a high voltage power supply device, a high-voltage electrical room, and a dustproof antifreezing sprinkler, and a top end of the ramp of the tail wagon steel structure is provided with a belt bend pulley positioned above the upper-stage forked hopper.

Further according to the invention, a front end of the main wagon loading boom and of the auxiliary wagon loading boom each is provided with a material dropping funnel.

Further according to the invention, a rear part of the main wagon loading boom is provided with a flattening device, and the flattening device and the material dropping funnel constitute a front-end material discharge device.

Further according to the invention, the front-end material discharge device has a height ≤2m to meet the requirement for space between an electrified overhead contact system and an upper edge of any domestic open wagon.

Preferably, the main wagon loading boom and the auxiliary wagon loading boom each is provided with a belt conveyor and an electronic belt scale.

Preferably, the upper-stage forked hopper and the lower-stage forked hopper each is internally provided with a reversing device.

The beneficial effects of the present invention are as below: the present invention adopts a design scheme of a twin telescopic boom structure and a dual-stage triple-channel forked hopper, which can not only continuously meter and load bulk freight (for example, coals or ores or the like) into a box of an open wagon, but also meet the conditions of use of electrified railway depots, making it possible to use the movable loading machine in an electrified railway depot, and making it suitable for electrified railways with overhead contact systems, thereby filling in the technological gaps in the field of bulk loading devices. Compared with an existing device, the movable loading machine has the following advantages:
(1) Compared with a loading manner of a traditional loading machine, the movable loading machine is advantageous to improving work efficiency, a loading precision and a loading degree of automation, and being more environmentally friendly.
(2) Compared with a traditional fixed quickly loading system, one half of rail track may be saved, land is saved, and it is well-founded to reduce construction investment, thereby being consistent with national land policy on "economical intensive land use"; secondly, the movable loading machine does not need to be provided with a buffer bin, and material may be loaded promptly, thereby completely avoiding a potential safety hazard caused by manual clearance when the bin is jammed, and facilitating improving safety and reliability of loading operation at depots.
(3) Compared with an existing movable loading machine, the front-end material discharge device of the movable loading machine with a twin telescopic boom structure is only used to discharge material into a wagon, and does not have a material distribution function. Therefore, the height of the front-end material discharge device may be reduced to 2m, which can completely meet the requirement for space between an electrified overhead contact system and an upper edge of any domestic open wagon, and thus the movable loading machine with a twin telescopic boom structure has a wide scope of application.
(4) Due to adoption of a twin telescopic boom structure, two booms adopted by the present invention are alternately used, thereby implementing continuous feed of material in case of a wagon bridge connection, ensuring a loading process without interruption or material spillage, and improving a loading efficiency.
(5) The front-end material discharge device of the movable loading machine with a twin telescopic boom structure is also designed with a flattening device, which may implement automatically flattening the material while loading, and is advantageous to improving the loading efficiency and reducing a production cost compared with a conventional artificial material flattening.

### BRIEF DESCRIPTION OF THE DRAWINGS

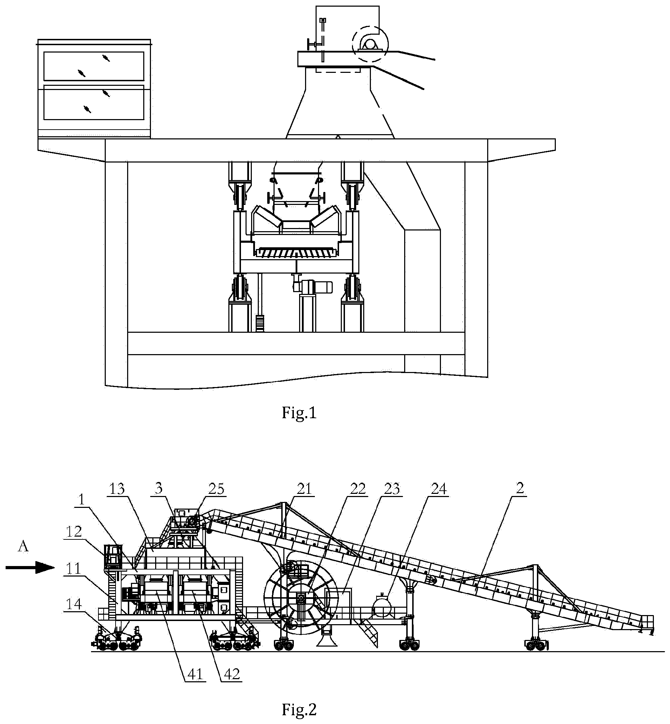

FIG. 1 is a schematic structural diagram of an existing movable loading machine;
FIG. 2 is a schematic structural diagram according to an embodiment of the present invention;

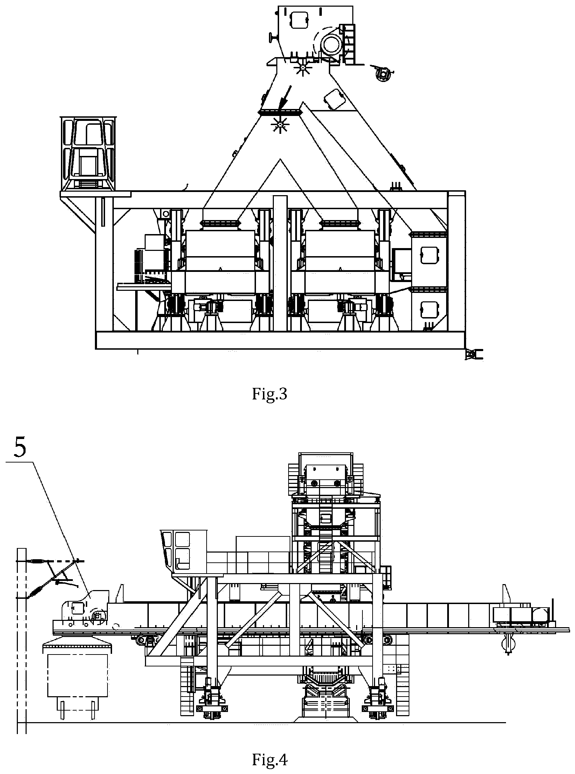

FIG. 3 is a schematic structural diagram of a dual-stage triple-channel forked hopper and of a twin telescopic boom according to an embodiment of the present invention;
FIG. 4 is a state diagram of the twin telescopic boom in direction A during working according to an embodiment of the present invention;

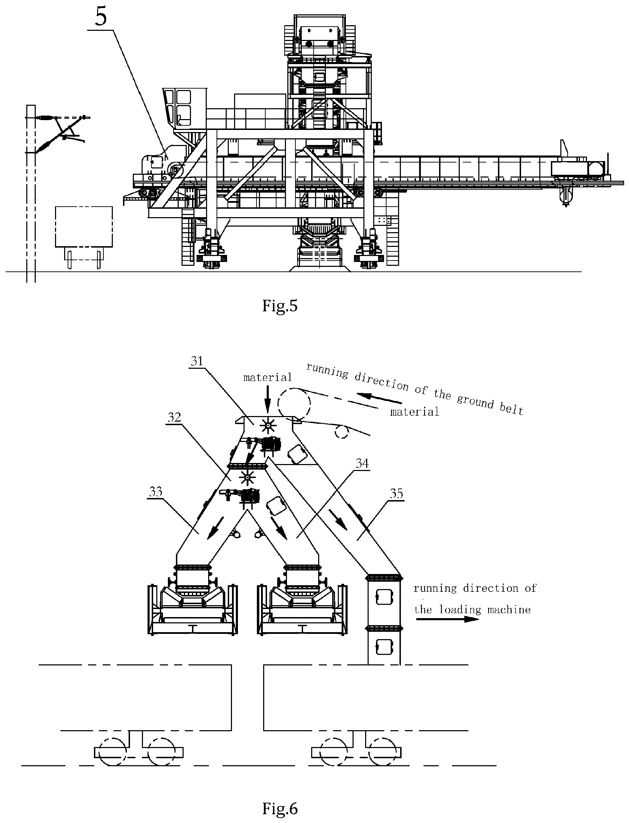

FIG. 5 is a state diagram of the twin telescopic boom in direction A not during working according to an embodiment of the present invention;
FIG. 6 is a schematic material distribution diagram of a dual-stage triple-channel forked hopper according to an embodiment of the present invention;

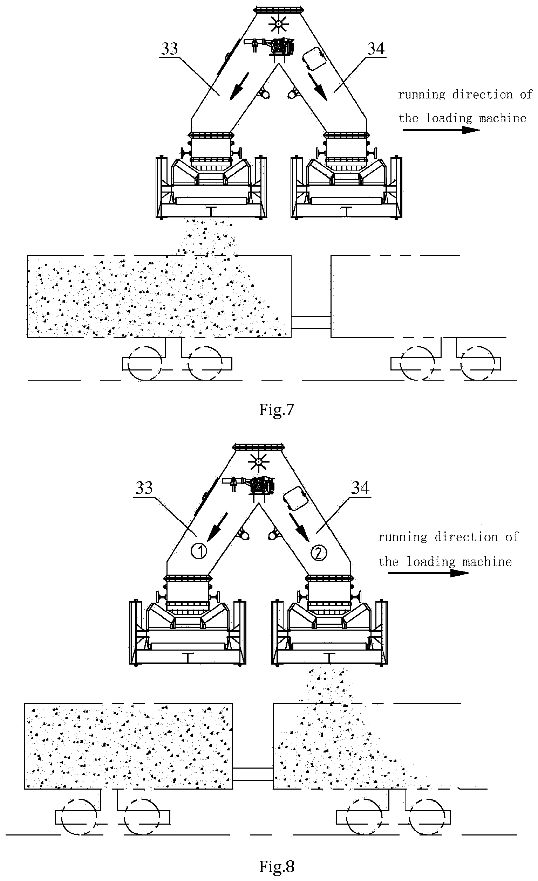

FIG. 7 is an operation schematic diagram before the twin telescopic boom and the front-end material discharge device are in bridge connection to a wagon according to an embodiment of the present invention;
FIG. 8 is an operation schematic diagram after the twin telescopic boom and the front-end material discharge device are in bridge connection to a wagon according to an embodiment of the present invention;

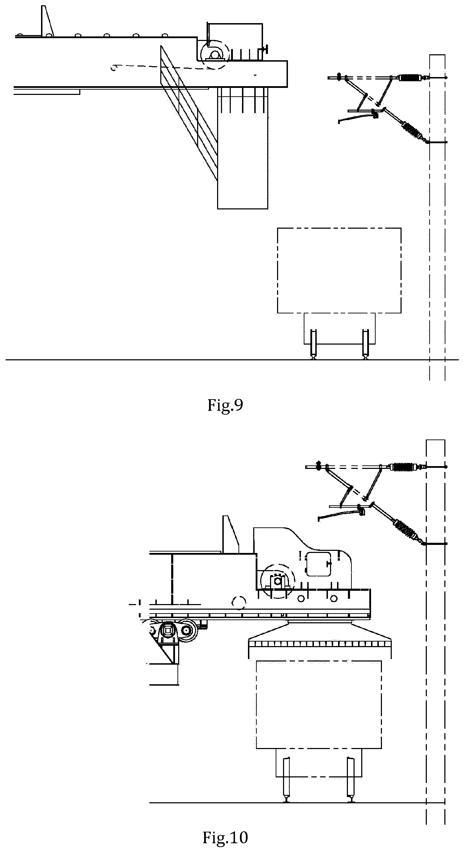

FIG. 9 is a schematic diagram of the front-end material discharge device of the existing movable loading machine;
FIG. 10 is a schematic diagram of the front-end material discharge device according to an embodiment of the present invention.

### DETAILED DESCRIPTION OF THE EMBODIMENTS

The following will further describe an embodiment of the present invention with reference to accompanying drawings.

A movable loading machine with a twin telescopic boom structure includes a head wagon 1 and a tail wagon 2, the tail wagon 2 is connected to the head wagon 1 via a traction pull rod, and a dual-stage triple-channel forked hopper 3 and a twin telescopic boom 4 are mounted on the head wagon 1.

The twin telescopic boom 4 is a main wagon loading boom 41 and an auxiliary wagon loading boom 42 mounted in parallel, the main wagon loading boom 41 and the auxiliary wagon loading boom 42 both are booms with telescopic function, the main wagon loading boom 41 and the auxiliary wagon loading boom 42 each is provided with a belt conveyor and an electronic belt scale. During a loading operation, the twin telescopic boom stretches out to the above of the wagon. When it is not in a loading operation, the twin telescopic boom retracts beyond a railway construction clearance, and thus it does not prevent a locomotive from passing through.

The dual-stage triple-channel forked hopper 3 includes an upper-stage forked hopper 31 and a lower-stage forked hopper 32, the upper-stage forked hopper 31 and the lower-stage forked hopper 32 both have three channels, namely a main wagon loading channel 33, an auxiliary wagon loading channel 34 and a recovery channel 35, where the main wagon loading channel 33 is connected to the main wagon loading boom 41 and the auxiliary wagon loading channel 34 is connected to the auxiliary wagon loading boom 42; and the upper-stage forked hopper 31 and the lower-stage forked hopper 32 each is internally provided with a reversing device, which may distribute material into different channels according to different needs.

The head wagon 1 includes a head wagon steel structure 11, an upper part of the head wagon steel structure 11 is provided with a driver control room 12 and a low-voltage electrical room 13, a bottom part of the head wagon steel structure 11 is provided with a walking drive device 14, and the main wagon loading boom 41 and the auxiliary wagon loading boom 42 are respectively mounted on the head wagon steel structure 11.

The tail wagon 2 includes a tail wagon steel structure 21 designed with a ramp structure, the ramp of the tail wagon steel structure 21 is provided with a carrier roller for ground belt running, a lower part of the tail wagon steel structure 21 is connected with a high voltage power supply device 22, a high-voltage electrical room 23, and a dustproof antifreezing sprinkler 24, and a top end of the ramp of the tail wagon steel structure 21 is provided with a belt bend pulley 25 positioned above the upper-stage forked hopper 31. To-be-loaded materials are conveyed, along the ramp by a ground belt, to the top of the tail wagon, and falls, by means of the belt bend pulley 25, into the upper-stage forked hopper 31.

The front end of the main wagon loading boom 41 and of the auxiliary wagon loading boom 42 each is provided with a material dropping funnel which is used to evenly and stably load materials in the booms into a wagon.

The rear part of the main wagon loading boom 41 is provided with a flattening device, which may automatically make the material even while loading in the process of loading. And the flattening device and the material dropping funnel constitute a front-end material discharge device 5. Due to adoption of the design of the twin telescopic boom, the front-end blanking device 5 does not have the function of material distribution any more, thereby the size is greatly reduced, and the front-end material discharge device 5 has a height ≤2m, which meets the requirement for space between an electrified overhead contact system and an upper edge of any domestic open wagon.

Working Process:
1. A to-be-loaded train parks on a loading line, and the twin telescopic boom 4 stretches out to the front-end material discharge device 5 and is positioned above a box of an open wagon.
2. Materials are conveyed, along the ramp of the tail wagon steel structure 11 by a ground belt conveyor, to the tail wagon 2, and falls, by means of the belt bend pulley 25, into the dual-stage triple-channel forked hopper 3. A driver controls the reversing device in the dual-stage triple-channel forked hopper 3 to convey materials to the main wagon loading channel 33; the materials fall into the main wagon loading boom 41, and are conveyed by a belt conveyor mounted on the main wagon loading boom 41 to the front-end material discharge device 5 and are finally loaded into the wagon carriage. A belt scale on the main wagon loading boom 41 meters, in real time, the weight of materials passing through the boom. In order to ensure that the materials are uniformly distributed in the wagon, the loading machine automatically controls the driving speed of the loading machine according to a rated loading capacity of the open wagon to ensure that the main wagon loading boom 41 is located at the tail end of the wagon when the wagon is fully loaded, and that the auxiliary wagon loading boom 42 is located at the head end of a next wagon.
3. When the present wagon is fully loaded and a bridge connection is needed, the driver controls the reversing device in the dual-stage triple-channel forked hopper 3 to convey materials to the auxiliary wagon loading channel 34, and the materials are loaded into the next wagon by a belt conveyor on the auxiliary wagon loading boom 42, thereby implementing continuous feed of materials in case of a wagon bridge connection, and ensuring that no material is scattered at a wagon connection joint.
4. As the loading machine moves forward, when the main wagon loading boom 41 is exactly above the next wagon, the driver controls the reversing device in the dual-stage triple-channel forked hopper 3 to switch the materials into the main wagon loading channel 33 again, so that the main wagon loading boom 41 continues finishing the loading operation of the wagon. The foregoing actions are repeatedly performed until the loading operation of the whole train is completed.
5. After the loading operation is completed, if the ramp of the tail wagon steel structure 11 still has some surplus materials, the driver may switch the reversing device in the dual-stage triple-channel forked hopper 3 to distribute the surplus materials to the recovery channel 35, and the surplus materials fall via the recovery channel 35 onto the ground belt conveyor and finally return to material yard. After all the operations are completed, the twin telescopic boom 4 retracts beyond a railway construction clearance, thereby ensuring a railway locomotive to pass through.

## Claims

1. A movable loading machine with a twin telescopic boom structure, comprising a head wagon (1) and a tail wagon (2), the tail wagon (2) being connected to the head wagon (1) via a traction pull rod, **characterized in that**, a twin telescopic boom (4) and a dual-stage triple-channel forked hopper (3) are mounted on the head wagon (4), the twin telescopic boom (4) comprises a main wagon loading boom (41) and an auxiliary wagon loading boom (42), which are mounted in parallel, the main wagon loading boom (41) and the auxiliary wagon loading boom (42) both are booms with a telescopic function, the dual-stage triple-channel forked hopper (3) comprises an upper-stage forked hopper (31) and a lower-stage forked hopper (32), the upper-stage forked hopper (31) and the lower-stage forked hopper (32) together have three channels, namely a main wagon loading channel (33), an auxiliary wagon loading channel (34) and a recovery channel (35), wherein the main wagon loading channel (33) is connected to the main wagon loading boom (41) and the auxiliary wagon loading channel (34) is connected to the auxiliary wagon loading boom (42),
wherein a front end of the main wagon loading boom (41) and of the auxiliary wagon loading boom (42) each is provided with a material dropping funnel,
wherein a rear part of the main wagon loading boom (41) is provided with a flattening device, and the flattening device and the material dropping funnel constitute a front-end material discharge device (5), and
wherein the front-end material discharge device (5) has a height ≤2m to meet the requirement for space between an electrified overhead contact system and an upper edge of any domestic open wagon.

2. The movable loading machine with a twin telescopic boom structure according to claim 1, wherein the head wagon (1) comprises a head wagon steel structure (11), an upper part of the head wagon steel structure is provided with a driver control room (12) and a low-voltage electrical room (13), a bottom part of the head wagon steel structure is provided with a walking drive device (14), and the main wagon loading boom (41) and the auxiliary wagon loading boom (42) each is mounted on the head wagon steel structure (11).

3. The movable loading machine with a twin telescopic boom structure according to any one of claims 1 to 2, wherein the tail wagon (2) comprises a tail wagon steel structure (21) designed with a ramp structure, the ramp of the tail wagon steel structure is provided with a carrier roller for ground belt running, a lower part of the tail wagon steel structure is connected with a high voltage power supply device (22), a high-voltage electrical room (23), and a dustproof antifreezing sprinkler (24), and a top end of the ramp of the tail wagon steel structure is provided with a belt bend pulley (25) positioned above the upper-stage forked hopper (31).

4. The movable loading machine with a twin telescopic boom structure according to any one of claims 1 to 3, wherein the main wagon loading boom (41) and the auxiliary wagon loading boom (42) each is provided with a belt conveyor and an electronic belt scale.

5. The movable loading machine with a twin telescopic boom structure according to any one of claims 1 to 4, wherein the upper-stage forked hopper and the lower-stage forked hopper each is internally provided with a reversing device.

## Patentansprüche

1. Bewegliche Lademaschine mit einer Doppelteleskopauslegerstruktur, umfassend einen Kopfwagen (1) und einen Endwagen (2), wobei der Endwagen (2) mit dem Kopfwagen (1) über eine Zugstange verbunden ist, **dadurch gekennzeichnet, dass** ein Doppelteleskopausleger (4) und ein zweistufiger Trichter mit Dreikanal-Gabelung (3) an dem Kopfwagen (4) montiert sind, der Doppelteleskopausleger (4) einen Hauptwagen-Ladeausleger (41) und einen Hilfswagen-Ladeausleger (42) umfasst, die parallel montiert sind, sowohl der Hauptwagen-Ladeausleger (41) als auch der Hilfswagen-Ladeausleger (42) Ausleger mit einer Teleskopfunktion sind, der zweistufige Trichter mit Dreikanal-Gabelung (3) einen gegabelten Trichter der oberen Stufe (31) und einen gegabelten Trichter der unteren Stufe (32) umfasst, der gegabelte Trichter der oberen Stufe (31) und der gegabelte Trichter der unteren Stufe (32) zusammen drei Kanäle haben, nämlich einen Hauptwagen-Ladekanal (33), einen Hilfswagen-Ladekanal (34) und einen Rückgewinnungskanal (35), wobei
der Hauptwagen-Ladekanal (33) mit dem Hauptwagen-Ladeausleger (41) verbunden ist und der Hilfswagen-Ladekanal (34) mit dem Hilfswagen-Ladeausleger (42) verbunden ist,
wobei ein vorderes Ende des Hauptwagen-Ladeauslegers (41) und des Hilfswagen-Ladeauslegers (42) jeweils mit einem Materialtropftrichter bereitgestellt ist,
wobei ein hinterer Teil des Hauptwagen-Ladeauslegers (41) mit einer Plättvorrichtung bereitgestellt ist und die Plättvorrichtung und der Materialtropftrichter eine Materialaustragsvorrichtung am vorderen Ende (5) bilden und
wobei die Materialaustragsvorrichtung am vorderen Ende (5) eine Höhe ≤ 2 m hat, um die Anforderung für einen Abstand zwischen einer unter Strom gesetzten Oberleitungsanlage und einer Oberkante eines beliebigen inländischen offenen Wagens zu erfüllen.

2. Bewegliche Lademaschine mit einer Doppelteleskopauslegerstruktur nach Anspruch 1, wobei der Kopfwagen (1) eine Kopfwagen-Stahlstruktur (11) umfasst, ein oberer Teil der Kopfwagen-Stahlstruktur mit einem Fahrersteuerungsraum (12) und einem Niederspannungs-Schaltraum (13) bereitgestellt ist, ein unterer Teil der Kopfwagen-Stahlstruktur mit einer Laufantriebsvorrichtung (14) bereitgestellt ist und der Hauptwagen-Ladeausleger (41) und der Hilfswagen-Ladeausleger (42) jeweils an der Kopfwagen-Stahlstruktur (11) montiert ist.

3. Bewegliche Lademaschine mit einer Doppelteleskopauslegerstruktur nach einem der Ansprüche 1 bis 2, wobei der Endwagen (2) eine Endwagen-Stahlstruktur (21) umfasst, die mit einer Rampenstruktur konstruiert ist, die Rampe der Endwagen-Stahlstruktur mit einer Tragwalze für den Erdungsbandlauf bereitgestellt ist, ein unterer Teil der Endwagen-Stahlstruktur mit einer Hochspannungs-Stromversorgungsvorichtung (22), einem Hochspannungs-Schaltraum (23) und einem staubdichten frostgeschützten Sprinkler (24) verbunden ist und ein oberes Ende der Rampe der Endwagen-Stahlstruktur mit einer Bandumlenkrolle (25) bereitgestellt ist, die über dem gegabelten Trichter der oberen Stufe (31) positioniert ist.

4. Bewegliche Lademaschine mit einer Doppelteleskopauslegersturktur nach einem der Ansprüche 1 bis 3, wobei der Hauptwagen-Ladeausleger (41) und der Hilfswagen-Ladeausleger (42) jeweils mit einem Bandförderer und einer elektronischen Bandwaage bereitgestellt ist.

5. Bewegliche Lademaschine mit einer Doppelteleskopauslegerstruktur nach einem der Ansprüche 1 bis 4, wobei der gegabelte Trichter der oberen Stufe und der gegabelte Trichter der unteren Stufe jeweils intern mit einer Wendevorrichtung bereitgestellt ist.

## Revendications

1. Machine de chargement mobile avec une structure de flèche télescopique double, comprenant un wagon de tête (1) et un wagon de queue (2), le wagon de queue (2) étant raccordé au wagon de tête (1) par l'intermédiaire d'une bielle de traction, **caractérisée en ce qu'**une flèche télescopique double (4) et une trémie fourchue à triple canal et double étage (3) sont montées sur le wagon de tête (4), la flèche télescopique double (4) comprend une flèche de chargement de wagon principal (41) et une flèche de chargement de wagon auxiliaire (42), qui sont montées en parallèle, la flèche de chargement de wagon principal (41) et la flèche de chargement de wagon auxiliaire (42) sont toutes les deux des flèches avec une fonction télescopique, la trémie fourchue à triple canal et double étage (3) comprend une trémie fourchue d'étage supérieur (31) et une trémie fourchue d'étage inférieur (32), la trémie fourchue d'étage supérieur (31) et la trémie fourchue d'étage inférieur (32) possèdent conjointement troix canaux, à savoir un canal de chargement de wagon principal (33), un canal de chargement de wagon auxiliaire (34) et un canal de récupération (35), dans laquelle
le canal de chargement de wagon principal (33) est raccordé à la flèche de chargement de wagon principal (41) et le canal de chargement de wagon auxiliaire (34) est raccordé à la flèche de chargement de wagon auxiliaire (42),
dans laquelle une extrémité avant de la flèche de chargement de wagon principal (41) et de la flèche de chargement de wagon auxiliaire (42) chacune est pourvue d'un entonnoir de chute de matériau,
dans laquelle une partie arrière de la flèche de chargement de wagon principal (41) est pourvue d'un dispositif d'aplatissement, et le dispositif d'aplatissement et l'entonnoir de chute de matériau constituent un dispositif de décharge de matériau d'extrémité avant (5), et
dans laquelle le dispositif de décharge de matériau d'extrémité avant (5) possède une hauteur < 2 m pour satisfaire à la nécessité d'espace entre un système de contact aérien électrifié et un bord supérieur d'un quelconque wagon ouvert domestique.

2. Machine de chargement mobile avec une structure de flèche télescopique double selon la revendication 1, dans laquelle le wagon de tête (1) comprend une structure en acier de wagon de tête (11), une partie supérieure de la structure en acier de wagon de tête est pourvue d'une salle de commande pour conducteur (12) et d'une salle de commande basse tension (13), une partie inférieure de la structure en acier de wagon de tête est pourvue d'un dispositif moteur mobile (14), et la flèche de chargement de wagon principal (41) et la flèche de chargement de wagon auxiliaire (42) sont chacune montées sur la structure en acier de wagon de tête (11).

3. Machine de chargement mobile avec une structure de flèche télescopique double selon l'une quelconque des revendications 1 à 2, dans laquelle le wagon de queue (2) comprend une structure en acier de wagon de queue (21) conçue avec une structure en rampe, la rampe de la structure en acier de wagon de queue est pourvue d'un rouleau porteur pour déplacement de courroie au sol, une partie inférieure de la structure en acier de wagon de queue est raccordée à un dispositif d'alimentation électrique à haute tension (22), une salle de commande haute tension (23), et un arroseur antigel et anti-poussière (24), et une extrémité supérieure de la rampe de la structure en acier de wagon de queue est pourvue d'une poulie de retour de courroie (25) positionnée au-dessus de la trémie fourchue d'étage supérieur (31).

4. Machine de chargement mobile avec une structure de flèche télescopique double selon l'une quelconque des revendications 1 à 3, dans laquelle la flèche de chargement de wagon principal (41) et la flèche de chargement de wagon auxiliaire (42) sont chacune pourvues d'un transporteur à courroie et d'une balance de courroie électronique.

5. Machine de chargement mobile avec une structure de flèche télescopique double selon l'une quelconque des revendications 1 à 4, dans laquelle la trémie fourchue d'étage supérieur et la trémie fourchue d'étage inférieur sont chacune intérieurement pourvues d'un dispositif de marche arrière.
